# EUROPÄISCHE PATENTSCHRIFT

(11) **EP 1 262 265 B1**
(45) Veröffentlichungstag und Bekanntmachung des Hinweises auf die Patenterteilung: **19.05.2004**
(21) Anmeldenummer: 01127542.7
(22) Anmeldetag: 19.11.2001
(51) Int. Cl.: B23C 1/00, B23B 39/00

(54) **NC-gesteuerte Portalfräsmaschine**
NC controlled vertical milling machine
Fraiseuse à portique à contrôle numérique

(30) Priorität: 21.05.2001 DE 10124935
(43) Veröffentlichungstag der Anmeldung: 04.12.2002
(73) Patentinhaber: FOTEC Forschungs- und Technologiezentrum für Industrie- und Energietechnik GmbH, 09119 Chemnitz (DE)
(72) Erfinder: Scheibner, Heinz, 09224 Grüna (DE); Scharnweber, Franz, 09128 Chemnitz (DE); Kaiser, Peter, 09130 Chemnitz (DE); Hoyer, Heiko, 09113 Chemnitz (DE); Kretzschmar, Ulrich, 01279 Dresden (DE)
(74) Vertreter: Seerig & Hübner

(56) Entgegenhaltungen:
- DE-A- 3 404 869
- FR-A- 518 883
- US-A- 5 372 540

## Beschreibung

Die Erfindung betrifft eine NC-gesteuerte Portalfräsmaschine, bestehend aus einem Portal mit Energiekette und abgedeckter Führungsbahn für mindestens einen in Y-Achsrichtung verfahrbaren Schlitten mit einer in Z-Achsrichtung verfahrbaren Mehrachsbearbeitungseinheit, einem durch das Portal hindurchgeführtes Maschinenbett mit einem darauf in X-Achsrichtung verfahrbaren Maschinentisch.

NC-gesteuerte Portalfräsmaschinen mit kartesischen Achsen sind allgemein bekannt. In der DE 3404869 A1 ist eine Portalfräsmaschine beschrieben, bei der ein das Fräsaggregat in Querrichtung führender Querbalken auf stirnseitigen Vertikalführungen zweier senkrechten, ein Portal bildenden Pfosten höhenverfahrbar angeordnet ist, wobei der Querbalken zur Erhöhung seines Widerstandsmomentes gegen Biegekräfte zwischen den Pfosten eine Querschnittserweiterung aufweist. Damit der Querbalken Biege- und Torsionskräfte möglichst gut widerstehen kann, weisen die Pfosten zusätzlich zu den stirnseitigen Vertikalführungen an den einander zugewandten Seiten jeweils eine weitere Vertikalführung auf, an denen der Querbalken geführt ist. Durch diese Gestaltung ergibt es sich, dass die Torsionskräfte zwischen den Pfosten in die Pfosten eingeleitet werden.

Diese Erfindung weist den Nachteil auf, dass sich der materielle und konstruktive Aufwand für das Portal mit der Erhöhung der beim Bearbeitungsvorgang wirkenden Biege- und Torsionskräfte sich ständig vergrößert.

Aufgabe der Erfindung ist es, eine NC-gesteuerte Portalfräsmaschine, bestehend aus einem Portal mit Energiekette und abgedeckter Führungsbahn für mindestens einen in Y-Achsrichtung verfahrbaren Schlitten mit einer in Z-Achsrichtung verfahrbaren Mehrachsbearbeitungseinheit, einem durch das Portal hindurchgeführtes Maschinenbett mit einem darauf in X-Achsrichtung verfahrbaren Maschinentisch zu entwickeln, die sich durch eine besonders hohe Biege- und Torsionssteifigkeit des Portals auszeichnet.

Erfindungsgemäß wird die Aufgabe dadurch gelöst, dass das Portal als Rundbogenportal ausgebildet ist, welches an beiden Rundbogenenden auf einem Fundament fest angeordnet ist, am Rundbogenportal parallel nebeneinander zwei Rundbogenführungen angeordnet sind, wobei an der inneren Rundbogenführung der in Y-Achsrichtung verfahrbare Schlitten mit der in Z-Achsrichtung verfahrbaren Mehrachsbearbeitungseinheit angeordnet ist, die mit einer Drehachse (B) schwenkbar am Schlitten befestigt ist, und an der äußeren Rundbogenführung ein Kulissenschlitten in Y-Achsrichtung verfahrbar angeordnet ist, der eine parallel zur Drehachsrichtung (B) schwenkbare Kulisse in einem Kulissenlager aufnimmt, auf der der Schieber der Mehrachsbearbeitungseinheit in einer Linearführung geführt angeordnet ist, das Rundbogenportal die Energiekette und je ein Lagemesssystem für die beiden Y-Achsen und der Schlitten ein Lagemesssystem für die Drehachse (B) zur Positionierung des Schiebers der Mehrachsbearbeitungseinheit trägt. Vorteilhaft ist es, dass der Schlitten und der Kulissenschlitten mittels elektronisch gesteuerter Linearantriebe in Y-Achsrichtung verfahrbar sind. Zweckmäßig ist es, dass die Mehrachsbearbeitungseinheit als ein Frässchieber mit Motorspindel für ein Fräswerkzeug ausgebildet ist. In einer Ausführungsform der Erfindung bestehen die Rundbogenführungen aus je zwei parallel nebeneinander angeordneten Rundbogenführungsbahnen, zwischen denen die Linearmotore der Linearantriebe angeordnet sind.

Nachfolgend wird die Erfindung anhand eines Ausführungsbeispieles näher erläutert. Die dazugehörigen Zeichnungen zeigen:
- Figur 1:: eine schematische Darstellung einer Portalfräsmaschine
- Figur 2:: eine schematische Darstellung der Portalfräsmaschine mit in Y-Achsrichtung verfahrener Mehrachsbearbeitungseinheit und senkrechter Z-Achse und
- Figur 3:: die schematische Darstellung der Portalfräsmaschine mit in Y-Achsrichtung verfahrener Mehrachsbearbeitungseinheit und schräger Z-Achse

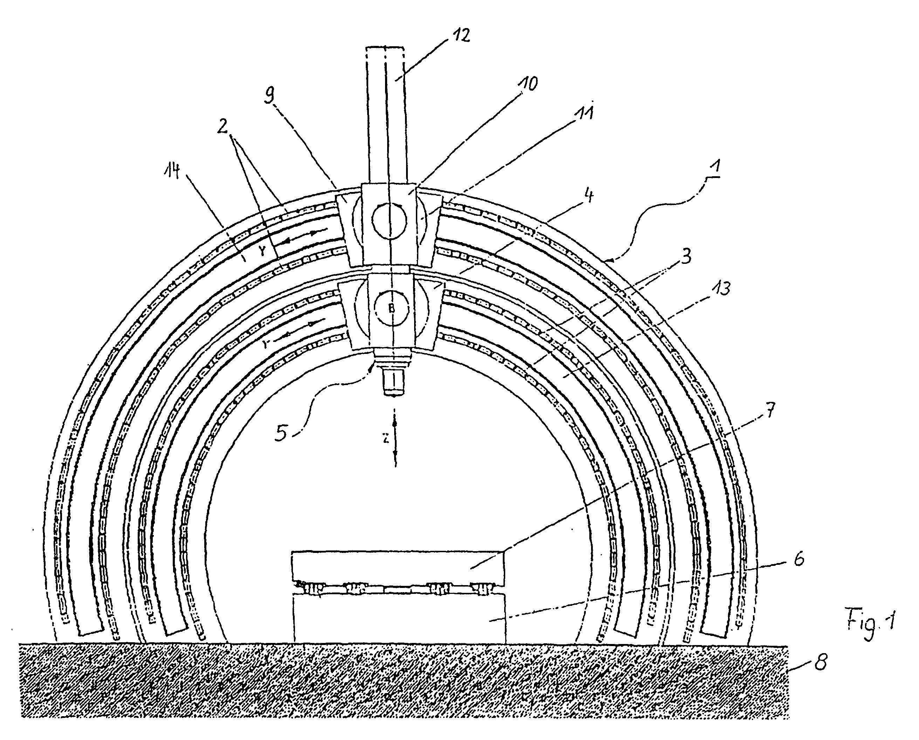

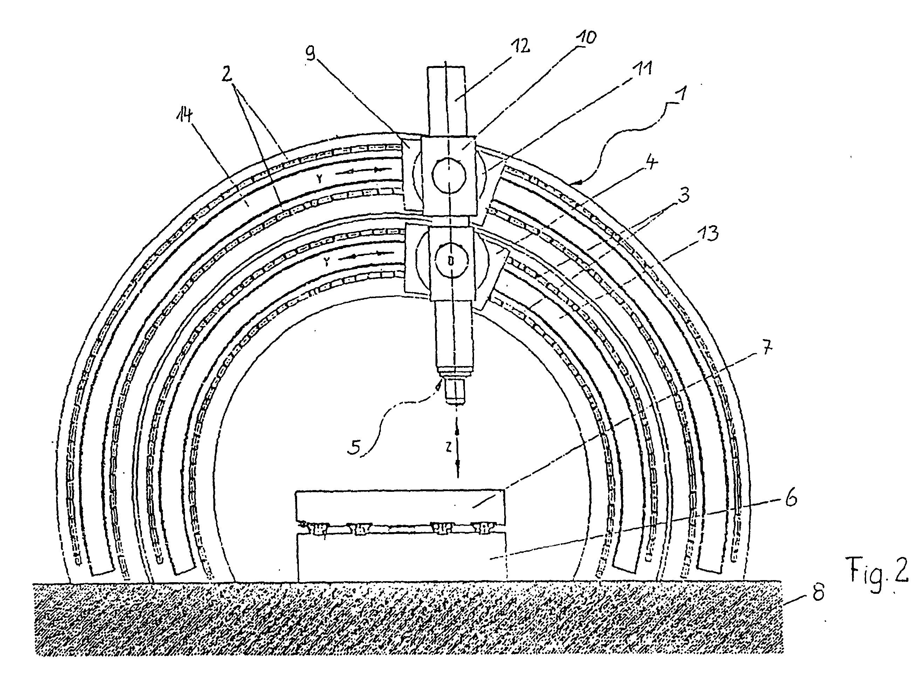

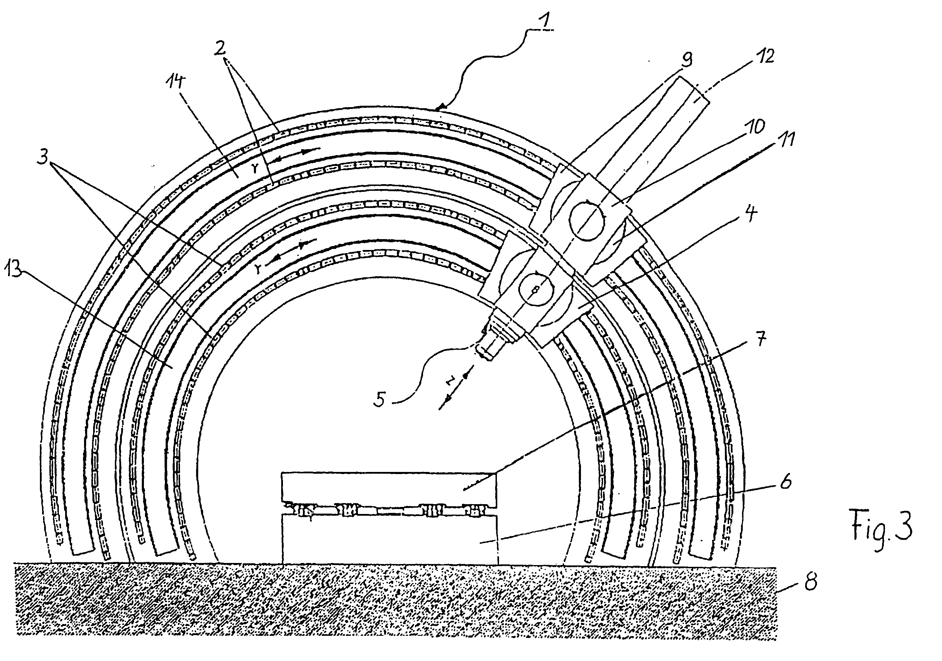

Die schematische Darstellung gemäß Figur 1 zeigt eine Portalfräsmaschine mit einem Rundbogenportal 1 mit nicht dargestellter Energiekette und abgedeckten Führungsbahnen einer Rundbogenführung 3 für einen Schlitten 4 mit einer in Z-Achsrichtung verfahrbarer Mehrachsbearbeitungseinheit 5 und einer abgedeckten Rundbogenführung 2 für einen in Y-Achsrichtung parallel zum Schlitten 4 verfahrbaren Kulissenschlitten 9. Die Enden des Rundbogenportals 1 sind fest in einem Fundament 8 verankert. Durch das Rundbogenportal 1 ist ein Maschinenbett 6 mit einem darauf in X-Achsrichtung mittels Linearantrieb verfahrbaren Maschinentisch 7 hindurchgeführt auf dem Fundament 8 angeordnet. Der Kulissenschlitten 9 und der Schlitten 4 mit der Mehrachsbearbeitungseinheit 5 sind durch je einen elektronisch gesteuerten Linearantrieb 14, 13 auf den Rundbogenführungen 2 und 3 in Y-Achsrichtung verfahrbar angeordnet. Die Mehrachsbearbeitungseinheit 5 ist auf dem Schlitten 4 um eine Drehachse (B) schwenkbar gelagert. Auf der äußeren Rundbogenführung 3 wird der Kulissenschlitten 9 mittels Linearantrieb 14 verfahren. Die Kulisse 10 ist parallel zur Drehachse (B) drehbar auf dem Kulissenschlitten 9 in einem Kulissenlager 11 gelagert und führt in einer nicht dargestellten Linearführung den Schieber 12, der beispielsweise ein Frässchieber mit einer Motorspindel für ein Fräswerkzeug sein kann. Die Positionierung des Schiebers 12 bezüglich der tangentialen Y-Achse und der Orientierung zur Drehachse (B) erfolgt durch das elektronisch gesteuerte Verfahren des Schlittens 4 und des Kulissenschlittens 9. Für das Lagemesssystem sind verschiedene Kombinationsmöglichkeiten von zwei der drei kinematischen Achsen (beide Y-Achsen und Drehachse B) gegeben. Die in Figur 2 dargestellte Lage des Schiebers 12 erfolgt durch elektronisch gesteuertes Verfahren des Kulissenschiebers 9 in Y-Achsrichtung und paralleles Schwenken der Kulisse 10 zur Drehachse B der Mehrachsbearbeitungseinheit 5 auf dem Schlitten 4. Die in Figur 3 dargestellte Lage des Schiebers 12 erfolgt durch elektronisch gesteuertes Verfahren des Schlittens 4 für die Mehrachsbearbeitungseinheit 5 und des Kulissenschlittens in Y-Achsrichtungen.

Durch den verhältnismäßig großen Abstand in Z-Achsrichtung zwischen der Drehachse B der am Schlitten 4 schwenkbar angeordneten Mehrachsbearbeitungseinheit 5 und der Kulissenlagerung können höhere Bearbeitungskräfte von der Mehrachsbearbeitungseinheit 5 auf das Rundbogenportal 1 übertragen werden und somit bessere Zerspanleistungen erreicht werden.

### Bezugszeichenliste

- 1 =: Rundbogenportal
- 2 =: Rundbogenführung, außen
- 3 =: Rundbogenführung, innen
- 4 =: Schlitten für Mehrachsbearbeitungseinheit
- 5 =: Mehrachsbearbeitungseinheit
- 6 =: Maschinenbett
- 7 =: Maschinentisch
- 8 =: Fundament
- 9 =: Kulissenschlitten
- 10 =: Kulisse
- 11 =: Kulissenlager
- 12 =: Schieber
- 13 =: Linearantrieb für den Schlitten der Mehrachsbearbeitungseinheit
- 14 =: Linearantrieb für Kulissenschlitten

## Patentansprüche

1. NC-gesteuerte Portalfräsmaschine, bestehend aus einem Portal mit Energiekette und abgedeckten Führungsbahnen für mindestens einen in Y-Achsrichtung verfahrbaren Schlitten mit einer in Z-Achsrichtung verfahrbaren Mehrachsbearbeitungseinheit, einem durch das Portal hindurchgeführten Maschinenbett mit einem darauf in X-Achsrichtung verfahrbaren Maschinentisch, **dadurch gekennzeichnet, dass** das Portal als Rundbogenportal (1) ausgebildet ist, welches an beiden Rundbogenenden auf einem Fundament (8) fest angeordnet ist, am Rundbogenportal (1) parallel nebeneinander zwei Rundbogenführungen (2, 3) angeordnet sind, wobei an der inneren Rundbogenführung (3) der in Y-Achsrichtung verfahrbare Schlitten (4) mit der in Z-Achsrichtung verfahrbaren Mehrachsbearbeitungseinheit (5) angeordnet ist, die mit einer Drehachse (B) schwenkbar am Schlitten (4) befestigt ist, und an der äußeren Rundbogenführung (2) ein Kulissenschlitten (9) in Y-Achsrichtung verfahrbar angeordnet ist, der eine parallel zur Drehachsrichtung (B) schwenkbare Kulisse (10) in einem Kulissenlager (11) aufnimmt, auf der der Schieber (12) der Mehrachsbearbeitungseinheit (5) in einer Linearführung geführt angeordnet ist, das Rundbogenportal (1) die Energiekette und je ein Lagemesssystem für die beiden Y-Achsen und der Schlitten (4) ein Lagemesssystem für die Drehachse (B) zur Positionierung des Schiebers (12) der Mehrachsbearbeitungseinheit (5) trägt.

2. NC-gesteuerte Portalfräsmaschine nach Anspruch 1, **dadurch gekennzeichnet, dass** der Schlitten (4) und der Kulissenschlitten (9) mittels elektronisch gesteuerter Linearantriebe (13, 14) in Y-Achsrichtung verfahrbar sind.

3. NC-gesteuerte Portalfräsmaschine nach Anspruch 1, **dadurch gekennzeichnet, dass** die Mehrachsbearbeitungseinheit (5) als ein Frässchieber mit Motorspindel für ein Fräswerkzeug ausgebildet ist.

4. NC-gesteuerte Portalfräsmaschine nach Anspruch 1 und 2, **dadurch gekennzeichnet, dass** die Rundbogenführungen (2, 3) aus je zwei parallel nebeneinander angeordneten Rundbogenführungsbahnen bestehen, zwischen denen die Linearmotore der Linearantriebe (13, 14) angeordnet sind.

## Claims

1. NC-controlled portal milling machine, consisting of a portal with energy chain and covered guideways for at least one carriage, traversable in the Y direction and having a multi-axis machining unit traversable in the Z direction, and of a machine bed guided through the portal and having a machine table traversable thereon in the X direction, **characterized in that** the portal is designed as a round arch portal (1) which is firmly arranged on a foundation (8) at both round arch ends, two round arch guides (2, 3) are arranged in parallel next to one another on the round arch portal (1), the carriage (4) traversable in the Y direction and having the multi-axis machining unit (5) traversable in the Z direction being arranged on the inner round arch guide (3), the said multi-axis machining unit (5) being pivotably fastened to the carriage (4) by means of a rotation axis (B), and a link carriage (9) being arranged on the outer round arch guide (2) in such a way as to be traversable in the Y direction, the said link carriage (9), in a link bearing (11), accommodating a link (10) which is pivotable parallel to the rotation axis direction (B) and on which the ram (12) of the multi-axis machining unit (5) is arranged, guided in a linear bearing, the round arch portal (1) carrying the energy chain and a respective position measuring system for the two Y axes, and the carriage (4) carrying a position measuring system for the rotation axis (B) for positioning the ram (12) of the multi-axis machining unit (5).

2. NC-controlled portal milling machine according to Claim 1, **characterized in that** the carriage (4) and the link carriage (9) are traversable in the Y direction by means of electronically controlled linear drives (13, 14).

3. NC-controlled portal milling machine according to Claim 1, **characterized in that** the multi-axis machining unit (5) is designed as a milling ram with motor spindle for a milling tool.

4. NC-controlled portal milling machine according to Claims 1 and 2, **characterized in that** the round arch guides (2, 3) each consist of two round arch guideways which are arranged in parallel next to one another and between which the linear motors of the linear drives (13, 14) are arranged.

## Revendications

1. Fraiseuse à portique à commande numérique, composée d'un portique avec une chaîne d'énergie et des glissières recouvertes pour au moins un chariot mobile dans le sens de l'axe Y avec une unité d'usinage dans plusieurs axes mobile dans le sens de l'axe Z, d'un banc de machine passant à travers le portique sur lequel une table de machine peut se déplacer dans le sens de l'axe X, **caractérisée en ce que** le portique est réalisé sous la forme d'un portique en demi-cercle (1), lequel est monté à demeure sur une fondation (8) au niveau des deux extrémités du demi-cercle, deux guides en demi-cercle (2, 3) sont disposés parallèlement l'un à côté de l'autre sur le portique en demi-cercle (1), le chariot (4) mobile dans le sens de l'axe Y muni de l'unité d'usinage dans plusieurs axes (5) mobile dans le sens de l'axe Z, laquelle est fixée au chariot (4) à l'aide d'un axe de rotation (B) de manière à pouvoir pivoter, étant disposé sur le guide en demi-cercle intérieur (3), et un chariot coulissant (9) mobile dans le sens de l'axe Y étant disposé sur le guide en demi-cercle extérieur (2), lequel chariot reçoit une coulisse (10) pivotante parallèlement au sens de l'axe de rotation (B) dans un support de coulisse (11) sur laquelle coulisse est disposé le coulisseau (12) de l'unité d'usinage dans plusieurs axes (5) en étant guidé dans un guide linéaire, le portique en demi-cercle (1) supportant la chaîne d'énergie et à chaque fois un système de mesure de position pour les deux axes Y et le chariot (4) supportant un système de mesure de position pour l'axe de rotation (B) destiné à positionner le coulisseau (12) de l'unité d'usinage dans plusieurs axes (5).

2. Fraiseuse à portique à commande numérique selon la revendication 1, **caractérisée en ce que** le chariot (4) et le chariot coulissant (9) peuvent se déplacer dans le sens de l'axe Y à l'aide d'entraînements linéaires à commande électronique (13, 14).

3. Fraiseuse à portique à commande numérique selon la revendication 1, **caractérisée en ce que** l'unité d'usinage dans plusieurs axes (5) est réalisée sous la forme d'un coulisseau de fraisage avec broche motorisée pour un outil de fraisage.

4. Fraiseuse à portique à commande numérique selon la revendication 1 et 2, **caractérisée en ce que** les guides en demi-cercle (2, 3) se composent à chaque fois de deux glissières en demi-cercle disposées parallèlement l'une à côté de l'autre entre lesquelles sont disposés les moteurs linéaires des entraînements linéaires (13, 14).
